# EUROPEAN PATENT APPLICATION

(11) **EP 3 659 727 A1**
(43) Date of publication of application: **03.06.2020**
(21) Application number: 18208608.2
(22) Date of filing: 27.11.2018
(51) Int. Cl.: B22F 3/105, B33Y 10/00, B33Y 50/02, G01N 15/02, G01N 21/88

(54) **METHOD FOR AUTOMATIC IDENTIFICATION OF MATERIAL DEPOSITION DEFICIENCIES DURING AN ADDITIVE MANUFACTURING PROCESS AND MANUFACTURING DEVICE**

(71) Applicant: Siemens Aktiengesellschaft, 80333 München (DE)
(72) Inventor: Buggenthin, Felix, 81373 München (DE); Graichen, Andreas, 60211 Norrköping (SE); Joblin, Mitchell, 81825 München (DE)

(57) **Abstract**

The present invention pertains to a 3D-printing method and a manufacturing device configured to execute such a method. Modelling material is deposited in powder form, melted with an energy beam and subsequently solidified into solid form. According to the invention, each deposited material layer is examined by looking at a radiation signature of electromagnetic radiation emitted and/or reflected from a melt spot, which is created by the energy beam during melting of the deposited modelling material. The radiation signature discriminates between modelling material in powder form and solid form. This makes it possible to assess if the modelling material is insufficiently deposited at the melt spot in powder form. In case a material deposition deficiency is determined, a suitable corrective action may be performed, e.g. redepositing modelling material within the last deposited material layer.

The present invention relates particularly to selective laser melting (SLM) and other powder bed fusion processes. However, the present concepts are not limited to SLM and may be applied to various other additive manufacturing methods. The solution of the present invention advantageously provides an effective automatized solution for identifying material deposition deficiencies arising during manufacture.

## Description

The present invention pertains to a method for automatic identification of material deposition deficiencies during an additive manufacturing process and a manufacturing device for executing such a method.

In generative or additive manufacturing processes, also commonly referred to as "3D-printing processes", one or several materials are sequentially deposited and cured or fused in layers based on a digitized geometric model of an object. Amongst various advantages, 3D printing offers the possibility to integrally form complex components in one continuous process, which otherwise - within conventional manufacturing - would necessarily require elaborate installation and/or manufacturing efforts. 3D printing provides extraordinary design freedom and hence it is widely used for manufacturing with multiple applications in engineering, construction, industrial design, the transport industry, and generally everywhere where a resource-efficient process chain is used to produce individualized components in small and large series.

In selective laser melting (SLM), which is one example for a so-called powder bed fusion process, a component is built up layer by layer from a modelling material, in particular a metal, by depositing the modelling material in powder form on a platform and melting it locally using a focused high power-density laser, resulting in a solid, integral component after cooling. The stability of such a process and the quality of the manufactured component relies particularly on having a uniform and/or homogenous distribution of powder across the platform. For example, structural defects may form within the printed part in case of uneven powder distribution. Hence, early identification of potential problems with the powder distribution may support a robust and reliable SLM process.

SLM machines sometimes have a camera installed that acquire images each time the powder is distributed onto the build plate (a process referred to as recoating). However, often these images are manually inspected in a time consuming and error prone process. Recently, monitoring techniques have been increasingly suggested in order to obtain information about potential anomalies or printing defects. Often the detection methods are only applied after the component is finished in order to scrap defective components that do not comply with given requirements or specifications. However, sometimes real-time and/or online monitoring methods are suggested to obtain a detailed evaluation of the component already during the manufacturing process.

For example, prior art document Song et al., "Real Time Cr Measurement Using Optical Emission Spectroscopy during Direct Metal Deposition Process," IEEE Sensors Journal, vol. 12, no. 5, pp. 958-964, May 2012, discloses a real-time composition analysis for material characterization, defect detection, process optimization and process control of a direct metal deposition process (also known as Laser Metal Deposition). The method uses optical emission spectroscopy of plasma, which is induced by a process laser beam focused onto a metal powder.

Document Gurtler et al., "Influence of powder distribution on process stability in laser beam melting: Analysis of melt pool dynamics by numerical simulations," Solid Freeform Fabrication Proceedings, Austin, pp. 1099-1117, 2014, teaches that a volume of a melt pool, which forms around a laser as it contacts the power bed, is significantly smaller when contacting solid metal compared to metallic powder.

Document Boley et al., "Calculation of laser absorption by metal powders in additive manufacturing," Applied Optics 52, No. 9, pp. 2477-2482, 2015, finds that the metallic powders used in additive manufacturing produce a significantly higher absorptivity compared to when a laser contacts a flat metal surface.

Against this background, it is an object of the present invention to find solutions for automatized identification of material deposition deficiencies during an additive manufacturing process.

This object is achieved by a method having the features of claim 1 and a manufacturing device having the features of claim 13.

According to an aspect of the invention a method for automatic identification of material deposition deficiencies during an additive manufacturing process comprises additively manufacturing a component from a modelling material in material layers by depositing the modelling material in powder form, melting the deposited modelling material and solidifying the melted modelling material into solid form, wherein the modelling material is melted within each material layer with an energy beam, which irradiates and melts the modelling material at a melt spot thereby forming a melt pool around the melt spot; detecting a radiation signature of electromagnetic radiation emitted and/or reflected from the melt pool at the melt spot, wherein the radiation signature discriminates between the powder form and the solid form of the modelling material; defining a material condition of the modelling material at the melt spot on basis of the detected radiation signature; and assessing if the modelling material is insufficiently deposited at the melt spot in the powder form on basis of the material condition of the modelling material. According to another aspect of the invention, a manufacturing device is configured to execute the method according to the invention.

One idea of the present invention is to provide a method and a system for in-process quality monitoring based on real-time indicators of powder deposition issues. The method of the invention can discriminate regions of nominal powder spread from regions with inferior powder deposition by observing electromagnetic radiation emitted and/or reflected from a melt pool around the melt spot. The properties and thus the signature of the electromagnetic radiation from the melt spot is a function of the volumetric, geometric and/or thermal properties of the melt pool. More specifically, the radiation from the melt pool is indicative of the material and in particular of the condition of the material that the energy beam has contacted, e.g. a metallic powder versus a solid metal.

Research has shown amongst others that a melt pool volume may be significantly smaller, e.g. more than 50%, when, for example, a laser beam contacts solid metal compared to metallic powder. By investigating the characteristics of laser absorption by powder material it was further found that metallic powders used in additive manufacturing produce a significantly higher absorptivity compared to when a laser contacts a flat (metal) surface. Based on these effects, when a laser contacts powder, light gets reflected from the melt pool having a light spectrum with specific frequency components that result from the high absorptivity and the large melt pool volume. Alternatively, when a laser or other energy beam contacts an area of a powder bed, which has not been covered by powder (i.e., the beam contacts relatively flat solid metal laying underneath, e.g. fused and solidified powder and/or a platform surface), the melt pool's light spectrum contains different frequency components due to the lower absorptivity and reduced melt pool volume.

In essence, by observing the melt pool radiation emission/reflection spectrum, one is able to determine whether the energy beam has contacted only powder, only solid material or a mixture of both. Hence, it is possible to assess if the powder deposition is below a predetermined threshold, in which case a deposition deficiency is attested. Because the coordinates of the impact point of the energy beam are usually known, e.g. x-y coordinates in a horizontal plane, using this approach it is also possible to state the position on the powder bed where the missing powder occurs.

The reflection signature can be used to perform real-time process quality evaluation and trigger actions based on what the reflection signature indicates. For example, the system can trigger the build to stop if the reflection signature indicates that the energy beam contacted metal instead of powder. Since the system can assess the location of missing powder, in the case that multiple parts are being built simultaneously, only the single part suffering from missing powder can be terminated with the other parts continuing as normal. Moreover, the reflection signature can be used to retrospectively evaluate the component's quality. In a simple implementation, a rule-based system may use manually configured thresholds to determine the extent to which a component suffered from missing powder or too thinly spread powder during manufacturing. Alternatively, a machine learning approach could use labelled signatures (missing powder, thin powder, nominal powder) to classify the reflection signatures.

Hence, the method of the invention can automatically detect when powder spread is inhomogeneous or suboptimal. The position on the build plate where the powder spread problem is located can be specified with a very high temporal and spatial resolution. The benefits of the invention comprise less wasted material and print time (i.e., higher production yield), significantly reduced manual effort by highly trained individuals (i.e., more automation), increased part quality, and reduced reliance on destructive testing for quality assurance. These benefits are possible due to the use of higher temporal and spatial resolution than the typical sensors used to monitor the powder bed (e.g., a single camera image).

In conventional solutions on the other hand sensor data, e.g. images, often have to be manually inspected for recoating defects after a job has been finished. This process is time consuming and error prone work since some defects are difficult to detect by eye, for example because they are represented by only a few pixels intensity variations in the image.

In general, aspects of the invention offer great advantages for 3D printing or AM technology since 3D components may be printed with minimal reject/scrap rate. This allows for a more efficient, material saving and time saving manufacturing process. Particularly advantageous in general is the reduction of costs, weight, lead time, part count and manufacturing complexity coming along with employing AM technology for printing various components. Moreover, the geometric and functional shape of the printed components or objects may be flexibly designed with regard to the intended technical purpose of parts or regions of the component/object.

Free form fabrication (FFF), direct manufacturing (DM), fused deposition modelling (FDM), powder bed printing (PBP), laminated object manufacturing (LOM), laser metal deposition (LMD), stereo-lithography (SL), selective laser sintering (SLS), selective laser melting (SLM), selective laser sintering (SLS), selective heat sintering (SHS), electron beam melting (EBM), direct metal laser sintering (DMSL), direct ink writing (DIW), digital light processing (DLP) and additive layer manufacturing (ALM) belong to a general hierarchy of additive manufacturing (AM) methods, generally termed as 3D printing techniques. Those systems are used for generating three-dimensional objects based on digital model data by creating a cross-sectional pattern of the object to be formed and forming the three-dimensional solid object by sequentially building up layers of material. Any of such procedures will be referred to in the following description as AM or 3D-printing without loss of generality. AM or 3D-printing techniques usually include selectively depositing material layer by layer, selectively fusing or solidifying the material and removing excess material, if needed. 3D printing is currently used for prototyping and distributed manufacturing with multiple applications in engineering, construction, industrial design, automotive industries, aerospace industries, etc.

Advantageous embodiments and improvements of the present invention are found in the subordinate claims.

According to an embodiment, the method may further comprise tracking a position of the melt spot across the respective material layer. For example, in case of a laser beam as energy beam, the position of the laser's impact point is known at a high level of precision. Thus, the current position of the melt spot can be tracked and/or recorded. The method may further comprise mapping the material condition of the modelling material for the respective material layer as a function of the position. Hence, a map of the modelling material and its properties can be compiled for each material layer. Due to this, detailed spatial information on the spread and/or deposition of modelling powder is made available and can be used to acquire a detailed picture of the performance of the last recoating process.

According to an embodiment, the method may further comprise recording an image of the respective material layer with a camera. For example, the camera may be a digital optical camera, e.g. an RGB-camera equipped with a standard CMOS sensor. The method may further comprise labeling the image to have a material deposition deficiency in case the modelling material is insufficiently deposited in the respective material layer. For example, the camera may take an image of each material layer, which is then labelled according to whether one or several powder spread deficiencies were verified on this material layer. Thus, the radiation signature can be used to automatically label the corresponding powder bed image as containing a powder spread issue.

According to an embodiment, the method may further comprise masking the image of the respective material layer pixel-by-pixel with a mapped material condition of the modelling material for the respective material layer. The labelled and masked image comprises spatial information about any powder spread issue and thus can be used in a downstream system to induce further actions or for monitoring and documentation purposes.

According to an embodiment, the method may further comprise training a deficiency model on basis of images labeled and masked with the mapped material condition. The deficiency model may identify material deposition deficiencies in unmasked images of material layers. Thus, the information may be used in particular to train a machine learning system to automatically identify material deposition deficiencies. Like this, errors in powder recoating may be detected with much cheaper hardware (e.g. a normal RGB-camera). Once it is known whether powder is present or missing and having this information for each spatial location in the energy beam path, the corresponding powder bed image taken for each printed layer can be labelled automatically as having issues regarding powder spread homogeneity. The automatically labeled images can then be fed into a machine learning algorithm to train a model to identify powder distribution issues from powder bed images. Once sufficiently trained, the machine learning algorithm may then learn to predict when the powder bed contains a powder spread issue prior to exposing the powder bed to the laser. A signal may be sent to the machine to trigger multiple powder recoating runs until the inhomogeneous powder spread issue is remedied.

According to an embodiment, the method may further comprise performing a corrective action in case the modelling material is insufficiently deposited. The corrective action may comprise redepositing modelling material within the respective material layer, changing printer parameters of the additive manufacturing process and/or stopping the additive manufacturing process at least temporarily. Hence, possible corrective actions may comprise triggering a recoating/reposition of modelling material, changing printer parameters (laser power, scan speed, hatching angle, powder thickness, repositioning the build plate etc.), pausing the build and so on.

According to an embodiment, a deficiency category may be determined in case the modelling material is insufficiently deposited in the respective material layer. The deficiency category may assess an extent of the deficiency and/or a criticality of the deficiency. For example, it may be assessed if the powder deposition issue is considered terminal so that the semi-finished component has to be scrapped. In other cases, certain corrective actions may be sufficient. In one particular example, it may be enough to recoat the printing platform with modelling material. In another example, it may be assessed if the problem is considered minor so that a corrective action may not even be necessary. The criticality of the defect may depend on the specific use case at hand. For some components stricter quality requirements may apply than for others.

According to an embodiment, the method may further comprise evaluating a manufacturing quality of the component on basis of assessed material deposition deficiencies. For example, the quality specification for a single component may not be uniform because some areas of the component may undergo more stresses, or be more prone to failing, than other areas. With the extremely high spatial resolution of the radiation signature, it is possible to evaluate individual areas of the component for structural defects. For example, if a critical area has missing powder the component production may need to be terminated. For non-critical areas, missing spread or suboptimal powder distribution may be ignored.

According to an embodiment, the radiation signature may be based on electromagnetic radiation in the visible spectrum. The electromagnetic radiation may be detected with a photodetector. For example, a photodiode may be provided for capturing a reflection signature generated by a laser beam hitting the powder bed.

According to an embodiment, the energy beam may be configured as a laser beam. The radiation signature may be based on laser light from the laser beam, which is reflected at the modelling material and detected by a photodetector. The position of the impact point of the laser at the material layer can be steered in a very precise way, e.g. by means of deflection mirrors and/or focusing optics for directing the laser beam.

According to an embodiment, the additive manufacturing process may comprise a powder bed fusion process. The additive manufacturing process may particularly comprise selective laser melting, selective laser sintering, direct metal laser sintering, electron beam melting and/or selective heat sintering.

According to an embodiment, the modelling material may be metal, a metal alloy or a metallic material combination. For example, the modelling material may be aluminum, aluminum alloy, titanium, titanium alloy or a combination of several of these materials. In that case, the modelling material is deposited as a metal powder, which is then melted and fused with the energy beam, e.g. a laser beam, into a solid metal. The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. In the figures, like reference numerals denote like or functionally like components, unless indicated otherwise.
Fig. 1 shows a schematic flow diagram of a method for automatic identification of material deposition deficiencies during an additive manufacturing process according to an embodiment of the invention.
Fig. 2 shows a manufacturing device for executing the method of Fig. 1.
Fig. 3 shows a schematic flow diagram for training a deficiency model on basis of the method of Fig. 1.
Fig. 4 shows a schematic flow diagram of an application of the deficiency model of Fig. 3.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

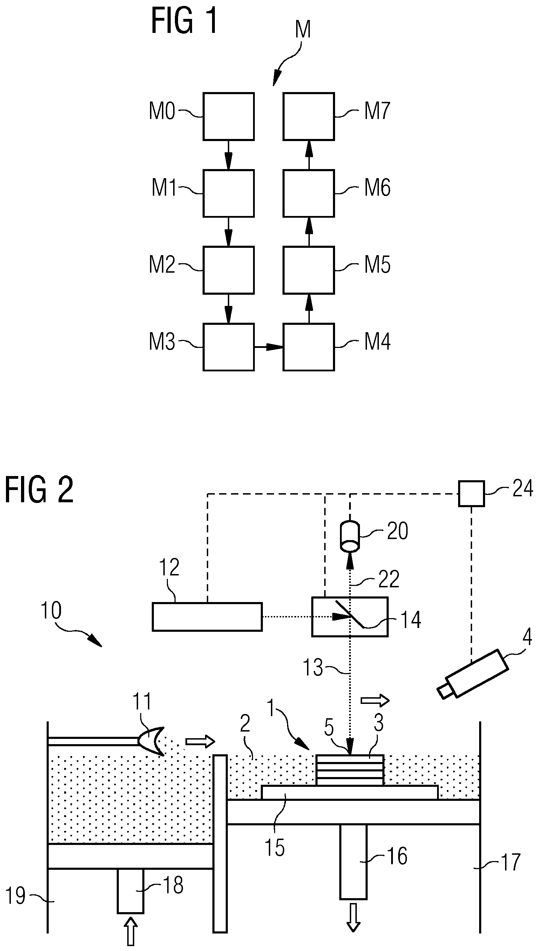

Figure 1 shows a schematic flow diagram of a method M for automatic identification of material deposition deficiencies 9 arising during an additive manufacturing process according to an embodiment of the invention. Fig. 2 shows a manufacturing device 10 for executing the method M of Fig. 1.

The 3D-printing method M is used for the additive production of a component 1 from a modelling material 2. To this end, the method M comprises under M0 additively manufacturing the component 1 by depositing, melting and solidifying a modelling material 2 in material layers 3. This particularly comprises depositing the modelling material 2 in powder form and liquefying or melting the deposited modelling material 2 with an energy beam 13, which irradiates and melts the modelling material 2 at a melt spot 5 (i.e. the impact point of the energy beam 13 on the deposited modelling material 2), thereby forming a localized pool of molten material around the melt spot 5, which is called melt pool. The melted modelling material 2 is subsequently solidified into solid form.

The basic AM process may be, for example, a selective laser melting (SLM) process, in which the deposited modelling material 2 is melted by a continuous or pulsed laser beam 13 being focused on a localized melt spot 5 on the material layer 3. This results in a molten pool or bath at the irradiated spot 5, which may be several material layers 3 deep and which may also melt some of the surrounding and already solidified modelling material 2. Next the laser beam 13 is moved further and the melt solidifies through cooling, whereby the last material layer 3 is fused with the material layer(s) 3 beneath.

The modelling material 2 may be selected from the group of metallic materials, metallic material combinations and metallic alloys. In one particular example, the modelling material 2 may be titanium, aluminum and/or other metal and/or an alloy or combination of these. In principle, the manufacturing device 10 may be configured for multi-component printing so that combinations of different materials may be printed at the same time. The person of skill will be readily aware that the term modelling material 2 includes such combinations of materials. In all cases, the modelling material 2 is provided in powder form.

Generally, the present invention provides many possibilities to liquefy the modelling material 2 by introducing heat locally into the deposited modelling material 2. The particular embodiment of the manufacturing device 10 in Fig. 2 and the associated 3D-printing method M is based on the use of a laser beam 13 within a SLM process. Such a laser beam 13 can generate heat very precisely and in a controlled manner. In SLM, as described above, the modelling material 2 is applied in powder form on a fabrication table 15 or platform within a fabrication chamber 17. The modelling material 2 is supplied from a supply chamber 19 adjacent to the fabrication chamber 17. To this end, a powder delivery system including a material feeder 11, roller and/or recoater blade are used to deliver modelling material 2 in a stepwise fashion for each deposited layer of modelling material 2 into the fabrication 17 chamber. The modelling material 2 forms a so-called powder bed on the fabrication table 15 within the fabrication chamber 17. The modelling material 2 laying on top of the powder bed is liquefied by local laser irradiation with the laser beam 13, resulting in a solid, continuous metal component 1 after cooling. However, it is understood that alternatively or in addition to a laser beam 13, the 3D-printing method M may also use particle beams, e.g. an electron beam, or other energy beams for liquefying the modelling material 2.

The manufacturing device 10 in Fig. 2 provides an energy source in the form of a laser 12, for example a Nd:YAG laser, a CO2 laser or the like. In Fig. 2, the laser 12 transmits the laser beam 13 selectively (i.e. locally) onto a certain part of the powder surface of the powdery modelling material 2. For this purpose, an optical deflection device or a scanner module such as a movable or tiltable mirror 14 can be provided, which deflects the laser beam 13 depending on its tilt position onto a certain part of the powder surface of the modelling material 2. The manufacturing device 10 may further comprise the usual components for adjusting such a laser beam 13, for example focusing optics or similar (not shown in Fig. 2). At the point of impact of the laser beam 13, i.e. the melt spot 5, the modelling material 2 is heated so that the powder particles are locally melted and form an agglomerate during cooling. Depending on a digital production model provided by a CAD system ("computer-aided design"), the laser beam 13 scans the powder surface (see arrow in Fig. 2). After selective melting and local agglomeration of the powder particles in the surface material layer 3 of the modelling material 2, excess and non-agglomerated metal modelling material 2 may be removed. Then the fabrication table 15 is lowered by means of a fabrication piston 16 (see arrow in Fig. 2) and new modelling material 2 is transferred from the supply chamber 19 into the fabrication chamber 17 with the aid of the material feeder 11 or another suitable device. While the fabrication platform 15 is lowered stepwise via the fabrication piston 16 the modelling material 2 is moved upward within the supply chamber 19 by a supply piston 18 so that the material feeder 11 may move new modelling material 2 into the fabrication chamber 17. Within the fabrication chamber 17, the modelling material 2 may be preheated by infrared light or similar means to a working temperature just below the melting temperature of the modelling material 2 to accelerate the melting process.

In this way, a three-dimensional sintered or "printed" metal component 1 is created from agglomerated modelling material 2 in an iterative generative build-up process, in which the surrounding powdery metal modelling material 2 can serve to support the part of metal component 1 that has been built up to then. Due to the continuous downward movement of the fabrication table 15 the metal component 1 is manufactured in layered model generation.

One of the leading causes of defective components manufactured by conventional SLM processes stems from uneven or inhomogeneously spread powder as the stability of the SLM process is highly dependent on achieving a homogenous distribution of powder across a fabrication table, particularly in areas that are exposed by the laser beam (i.e., where the printed component is located). When powder is not homogenously distributed, the resulting component's microstructure (e.g., grain size and lattice geometry) and material properties (e.g., strength) may not satisfy quality standards. This may result in the manufacturing of a component that may unexpectedly fail during operation or fatigue earlier than expected causing undue harm to other parts in a system. Inhomogeneously spread powder is recognized as one of the single largest problems facing additive manufacturing and hinders its widespread usage (e.g., for serial production purposes). In general, it is extremely difficult to ensure homogenous spreading of powder because there are many factors that can influence the distribution of powder. Some of the primary influencers are effects stemming from: part geometry, argon gas flow, recoater blade defects, powder size, possibly due to batch effects, overheating the part during exposure, inhomogenous packing of powder in supply, loading of powder supply etc. In addition to the known root causes of inhomogeneous distribution of powder, there are many others that are not known or well understood. It is often the case that powder spreading issues arise seemingly at random. For example, even when printing the exact same component with fixed process parameters, the distribution of powder at a given layer can differ substantially from one build job to the other. Conventionally, cameras are used to take an image of the powder bed after every recoating of the build plate with new powder. The images (one image per layer with often thousands of images for a single component) are then audited to check each manufactured component for any powder distribution issues. The manual auditing of these images by a human is extremely time intensive and boring working that can lead to miss identified issues. More recently, automated systems that can be supported by machine learning or artificially intelligent systems are being explored as a means of identifying when the powder is not homogenously spread. Such approaches are often suboptimal because they usually require humans to manually label thousands of images that can be used to train the algorithm. Since manually labelling the images is time intensive and requires a highly qualified additive manufacturing technician, it is not practical to produce large sets of training data. The limited amount of training data places a significant limitation on the maximum accuracy that such a machine learning approach can achieve. Another weakness is that such approaches have no knowledge of where the problem is spatially located, only that one exists. The spatial resolution of the images is extremely low in comparison to the proposed invention and the images contain no temporal information. The result is that these existing approaches are unable to identify a wide range of defects that are spatially or temporally constrained.

The method M and manufacturing device 10 of Figs. 1 and 2 overcome these drawbacks of conventional approaches by providing in-process quality monitoring based on real-time indicators of power spread issues, as will be explained in detail below.

Still referring to Figs. 1 and 2, the method M further comprises under M1 detecting a radiation signature of laser light 22 reflected/emitted from the melt pool at the melt spot 5, the radiation signature discriminating between the powder form and the solid form of the modelling material 2 as the light emitted from the melt spot 5 and the melt pool around it is a function of the material condition of the modelling material 2 in that region. For example, the radiation signature will be different in case that the melt spot 5 only comprises metal powder than in the case where the melt spot 5 has not been properly recoated with powder but only comprises solid modelling material 2 from material layers 3 already solidified. Thus, the detected radiation signature can be used under M2 to define a material condition of the modelling material 2 at the melt spot 5. The laser light 22 and thus the radiation signature is detected with a photodetector 20, e.g. one or several photodiodes. The corresponding data is then transferred from the photodetector 20 to a control device 24 of the manufacturing device 10, which analyzes the detected radiation signature. The control device 24 is configured to control the manufacturing device 10 and is communicatively coupled to the photodetector 20, the laser 20 as well as other control elements of the manufacturing device 10, e.g. the mirror 14 for directing the laser beam 13.

On that basis, it can be assessed under M3 if the modelling material 2 is sufficiently deposited at the melt spot 5 in the powder form or if a less than nominal amount of powder is deposited (e.g. no powder at all in the extreme case, i.e. the laser beam 13 has only hit solid metal). The control device 24 may use one or several predefined thresholds in order to assess if the material condition of the modelling material 2 fulfills certain quality criteria with respect to the amount of deposited powder.

The method M further comprises under M4 tracking a position of the melt spot 5 across the respective material layer 3, as the laser beam 13 scans the material layer 3. The method M further comprises under M5 mapping the material condition of the modelling material 2 for the respective material layer 3 as a function of the position. Hence, detailed spatial and time resolved information is available for each material layer 3 on potential material deposition deficiencies.

Still referring to Figs. 1 and 2, the method M further comprises under M6 performing a corrective action in case the modelling material 2 is insufficiently deposited, i.e. at least one relevant material deposition deficiency has been detected. A corrective action may be, for example, redepositing modelling material 2 within the respective material layer. Alternatively or additionally, printer parameters of the additive manufacturing process may be changed including but not limited to energy beam power, scan speed, fabrication table position, hatching angle, material layer deposition thickness and modelling material type. As another corrective action, the additive manufacturing process may be paused at least temporarily, e.g. in case manual intervention is required or because the modelling material 2 has to be replaced etc.

For any potential deficiency, a deficiency category is determined by the control device 24. The defect category assesses an extent of the deficiency as well as a criticality of the deficiency. For example, the criticality of the deficiency may be minor so that no action is needed. In another example, the criticality of the deficiency may be terminal and non-preventable and/or non-repairable so that the AM process is immediately stopped. In another example, the criticality of the deficiency may require corrective action as explained above.

The method M further comprises under M7 evaluating a manufacturing quality of the component 1 on basis of assessed material deposition deficiencies 9. To this end, the detailed information recorded for each material layer 3 on the material condition of the modelling material 2 may be analyzed to assess if the component 1 fulfills certain quality criteria. As this assessment is done within a completely automatic process, the method M of Fig. 1 provides a solution that is vastly superior to commonly known approaches. The benefits comprise less wasted material and print time and thus higher production yield, significantly reduced manual effort by highly trained individuals due to higher automation, increased part quality and reduced reliance on destructive testing for quality assurance.

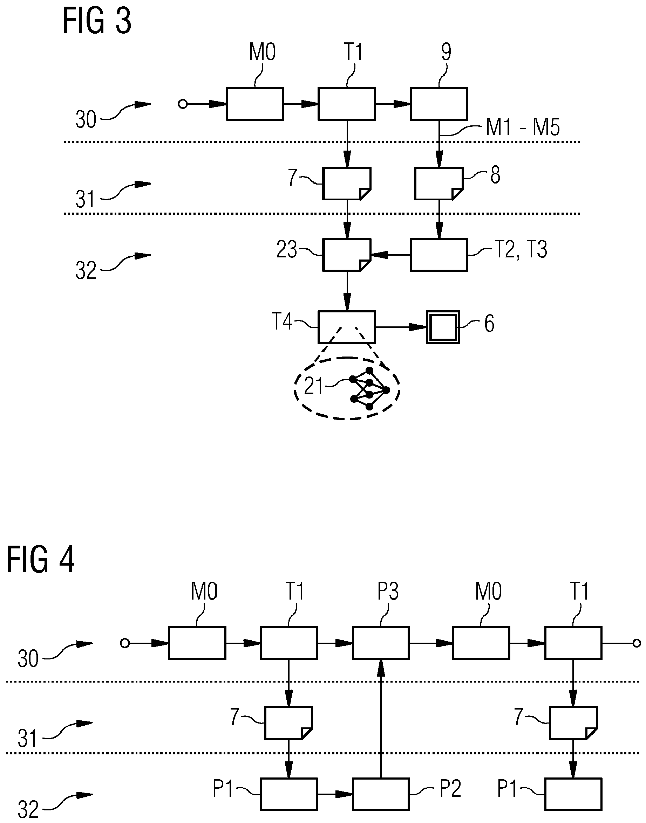

Fig. 3 shows a schematic flow diagram for training a deficiency model 6 on basis of the method M of Fig. 1. The figure is divided into a machine level 30 in the first row, a (raw) data level 31 in the second row and a machine learning/model level 32 in the third row.

The manufacturing method M is executed as described above by repeating the basic step under M0 of depositing, melting and solidifying the modelling material 2 in material layers 3. The manufacturing device 10 further comprises an optical camera 4 that acquires an image 7 for each material layer under T1. As above, each material layer 3 is probed for potential material deposition deficiencies 9 under steps M1 to M5 while melting the modelling material 2 in the material layers 3. As a result, deficiency data 8 are created including, in particular, a map of the material condition of the modelling material 2 within the respective material layer 3 as a function of position.

If a deficiency 9 is detected the deficiency data 8 are used under T2 and T3 to label and mask each image 7. The thus generated labeled/masked image 23 provides a detailed map of any material deposition deficiencies 9. The underlying image 7 was taken with the optical camera 4, which may be a conventional RGB-camera or the like. Hence, even if the underlying image 7 only offers a relatively small resolution view of the respective material layer 3, the associated deficiency map was created using the information acquired by positioning the laser beam 13 and thus has a very high spatial resolution. The labeled/masked images 23 are then used under T4 to train a deficiency model 6 by feeding the labeled/masked images 23 to a neural network 21 (or similar machine learning tool) representing the behavior of the additive manufacturing process, which can then be used by the control device 24 to identify material deposition deficiencies 9 in images 7, which have not been labeled and masked, as it will be described with reference to Fig. 4 below.

Fig. 4 shows a schematic flow diagram of an application of the deficiency model 6 of Fig. 3, which can be used by the control device 24 of the above or another manufacturing device 10 to identify material deposition deficiencies 9 in recorded images 7 before the laser beam 13 is used to melt the modelling material 2 in the respective last deposited material layer 3, that is after the last recoating step but before the actual melting of the modelling material 2. This means that even manufacturing devices 10 not having the above provisions to assess material deposition deficiencies 9 directly by detecting and analyzing the radiation signature of electromagnetic radiation 22 emitted and/or reflected from the melt spot 5 can in principle identify deficiencies 9 by merely analyzing the recorded images 7 on basis of the deficiency model 6.

To this end, the recorded images 7 (the images 7 are recorded under step T1) are probed under P1 for potential deficiencies 9 by analyzing each image 7 with the deficiency model 6, wherein the deficiency model 6 provides a prediction if a material deposition deficiency 9 is contained in the particular image 7 at a given confidence level. The deficiency model 6 can provide a deficiency category, which assesses the criticality of the deficiency 9, that is, whether corrective actions have to be performed or not. This is assessed under P2. If required and possible, the deficiencies 9 can now be remedied before the laser beam 13 is used to melt the powder in the respective material layer 3, for example, by triggering the manufacturing device 10 to perform a recoating under P3 to correct for inhomogeneous powder distribution (one of many possible preventive actions M3). Once the second recoating is completed, a new image 7 is acquired and checked for deficiencies 9. If no deficiencies 9 are found this time (due to the recoating process) the machine can continue operating as normal by melting the modelling material 2 in the respective material layer 3 (right side of Fig. 4). Hence, the method M may then be iterated with additional material layers 3 until the component 1 is finished or until another deficiency 9 is detected.

Deficiencies 9 are thus identified and removed in-situ in an automatized way during the manufacture of the component 1. Consequently, the scrap rate of defective components 1 may be significantly reduced. In the above scenario no manual intervention is necessary. However, in other scenarios, if the machine cannot self-correct, the corrective action could be to pause the building process at least temporarily. At this point a technician may perform other corrective actions or choose to terminate the build.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification.

The embodiments were chosen and described in order to best explain the principles of the invention and its practical applications, to thereby enable others skilled in the art to best utilize the invention and various embodiments with various modifications as are suited to the particular use contemplated. Many other examples will be apparent to one skilled in the art upon reviewing the above specification.

## Claims

1. A method (M) for automatic identification of material deposition deficiencies (9) during an additive manufacturing process, the method (M) comprising:
additively manufacturing (M0) a component (1) from a modelling material (2) in material layers (3) by depositing the modelling material (2) in powder form, melting the deposited modelling material (2) and solidifying the melted modelling material (2) into solid form, wherein the modelling material (2) is melted within each material layer (3) with an energy beam (13), which irradiates and melts the modelling material (2) at a melt spot (5) thereby forming a melt pool around the melt spot (5);
detecting (M1) a radiation signature of electromagnetic radiation (22) emitted and/or reflected from the melt pool at the melt spot (5), wherein the radiation signature discriminates between the powder form and the solid form of the modelling material (2);
defining (M2) a material condition of the modelling material (2) at the melt spot (5) on basis of the detected radiation signature; and
assessing (M3) if the modelling material (2) is insufficiently deposited at the melt spot (5) in the powder form on basis of the material condition of the modelling material (2).

2. The method (M) according to claim 1, further comprising:
tracking (M4) a position of the melt spot (5) across the respective material layer (3); and
mapping (M5) the material condition of the modelling material (2) for the respective material layer (3) as a function of the position.

3. The method (M) according to claim 1 or 2, further comprising:
recording (T1) an image (7) of the respective material layer (3) with a camera (4); and
labeling (T2) the image (7) to have a material deposition deficiency (9) in case the modelling material (2) is insufficiently deposited in the respective material layer (3).

4. The method (M) according to claim 3, further comprising:
masking (T3) the image (7) of the respective material layer (3) pixel-by-pixel with a mapped material condition of the modelling material (2) for the respective material layer (3).

5. The method (M) according to claim 4, further comprising:
training (T4) a deficiency model (6) on basis of images (7) labeled and masked with the mapped material condition, wherein the deficiency model (6) identifies material deposition deficiencies (9) in unmasked images (7) of material layers (3).

6. The method (M) according to one of the claims 1 to 5, further comprising:
performing (M6) a corrective action in case the modelling material (2) is insufficiently deposited, the corrective action comprising at least one of redepositing modelling material (2) within the respective material layer (3), changing printer parameters of the additive manufacturing process and stopping the additive manufacturing process at least temporarily.

7. The method (M) according to one of the claims 1 to 6, wherein a deficiency category is determined in case the modelling material (2) is insufficiently deposited in the respective material layer (3), wherein the deficiency category assesses at least one of an extent of the deficiency (9) and a criticality of the deficiency (9).

8. The method (M) according to one of the claims 1 to 7, further comprising:
evaluating (M7) a manufacturing quality of the component (1) on basis of assessed material deposition deficiencies (9).

9. The method (M) according to one of the claims 1 to 8, wherein the radiation signature is based on electromagnetic radiation (22) in the visible spectrum, which is detected with a photodetector (20).

10. The method (M) according to one of the claims 1 to 9, wherein the energy beam (13) is configured as a laser beam, wherein the radiation signature is based on laser light from the laser beam, which is reflected at the modelling material (2) and detected by a photodetector (20).

11. The method (M) according to one of the claims 1 to 10, wherein the additive manufacturing process comprises a powder bed fusion process, in particular at least one of selective laser melting, selective laser sintering, direct metal laser sintering, electron beam melting and selective heat sintering.

12. The method (M) according to one of the claims 1 to 11, wherein the modelling material is a metal, a metal alloy or a metallic material combination.

13. A manufacturing device (10) configured to execute a method (M) according to one of the claims 1 to 12.
